# EUROPEAN PATENT SPECIFICATION

(11) **EP 4 051 450 B1**
(45) Date of publication and mention of the grant of the patent: **04.12.2024**
(21) Application number: 20811728.3
(22) Date of filing: 30.10.2020
(51) Int. Cl.: B23Q 11/08, E05F 15/635, B23C 3/35

(54) **A KEY-DUPLICATING MACHINE**
SCHLÜSSELDUPLIZIERMASCHINE
MACHINE DE REPRODUCTION DE CLÉS

(30) Priority: 31.10.2019 IT 201900020176
(43) Date of publication of application: 07.09.2022
(73) Proprietor: SILCA S.p.A., 31029 Vittorio Veneto (TV) (IT)
(72) Inventor: PIGATTI, Giorgio, 31016 Cordignano (TV) (IT); DA RODDA, Oreste, 31020 Revine Lago (TV) (IT); TONELLO, Fabrizio, 33074 Fontanafredda (PN) (IT); CATTAI, Franco, 31029 Vittorio Veneto (TV) (IT)
(74) Representative: Braidotti, Andrea
(86) International application number: PCT/IB2020/060200
(87) International publication number: WO 2021/084491

(56) References cited:
- EP-A1- 1 985 412
- WO-A1-2015/010936
- WO-A1-2018/193431
- DE-A1- 102015 118 031
- KR-A- 20130 042 110

## Description

The present invention relates to a key duplicating machine with an innovative and improved mechanism for moving the casing.

The known professional or semi-professional electronic key duplicating machines (which are generally present and used in key duplicating centers) have an operational working area the front which substantially corresponds to the visible area in which the cutter or the cutters to obtain the bitting cuts on the key, the eventual probe or optical reader, at least one clamp to hold the key to be bitted or duplicated, and the trolleys for moving the clamp/s.

Conveniently, mainly for safety reasons, the duplicating machines are provided with a casing to casing and/or isolate, at least during the cutting phase, the aforementioned working area from the external environment, to thus prevent any type of access to said area by the operator and, at the same time, prevent the escape of machining splinters or sparks resulting from the cutting of the key.

In particular, this casing is generally made of transparent material so as to allow the operator to view the operating area in any case even when the casing is closed, that is, when said zone is isolated from the external environment by the casing itself.

Conveniently, the casing is usually articulated to the support structure of the machine, for example to its base, and by means of its rotation around corresponding articulation pins it is made to pass from an open condition, in which the operating area of the machine is accessible and communicating with the external environment, in the aforementioned closed condition, in which the machine operating area is isolated from the external environment.

Currently, the movement of the casing to make it pass from the open to the closed condition, and vice versa, is carried out exclusively manually by the operator.

It is easy to understand how the need to always and only have to move the casing manually makes the known solutions not particularly comfortable and efficient.

In this context, the known solutions proposed for motorizing and automating the movement of the casing are particularly complicated in construction, as well as bulky.

DE102015118031 describes a solution in which a motor, positioned laterally and externally to the casing casing to be moved, causes the rotation of a pinion which cooperates with a rack which is fixed to the casing casing.

EP1985412 describes a solution in which a motor, positioned laterally and externally to the casing casing to be moved, causes the rotation of a guide that supports a casing casing.

KR20130042110 describes a solution in which one end of an articulation arm is fixed to the casing which at the other end is articulated to a toothed wheel cooperating with a motorized rack positioned laterally and externally to the covering casing to be moved.

WO2015/010936 and WO2018/193431 describe key duplicating machines in which a support structure is provided, a front operational area accessible by the operator and containing a cutter or other cutting element and a clamp for locking the key.

The object of the invention is to propose a mechanism for motorized movement, in opening and/or closing, of the carter provided in a key-cutting machine, thus making this movement operation particularly convenient and efficient.

Another object of the invention is to propose a mechanism which is completely automated.

Another object of the invention is to propose a mechanism that allows to increase the safety level of the corresponding duplicating machine in which said mechanism is used, and this both during the closing phase of the casing and in the closed casing condition.

Another object of the invention is to propose a mechanism of reduced bulk.

Another object of the invention is to propose a mechanism which is simple from the constructive point of view.

Another object of the invention is to propose a mechanism that also allows manual handling of the casing.

Another object of the invention is to propose a mechanism which is an improvement and/or alternative with respect to traditional solutions.

Another object of the invention is to propose a mechanism which can be produced in a simple, rapid and low-cost manner.

Another object of the invention is to propose a mechanism which can also be used in duplicating machines already available on the market.

Another object of the invention is to propose a duplicating machine in which the movement of the casing is motorized and automated, and which can also be carried out manually.

Another object of the invention is to propose a duplicating machine with reduced dimensions and simple, quick and intuitive use.

Another object of the invention is to propose a duplicating machine which can be manufactured simply, quickly and at low costs.

All these purposes, both individually and in any combination thereof, and others that will result from the following description, are achieved, according to the invention, with a duplicating machine having the characteristics indicated in claim 1.

The present invention is further clarified below. in a preferred embodiment thereof, reported for purely illustrative and non-limiting purposes with reference to the attached drawings, in which:
- Figure 1: is a perspective view of an electronic key duplicating machine according to the invention with the front protection casing of the operating working area in closed condition,
- Figure 2: shows it in perspective view with the front casing in partially open condition,
- Figure 3: shows it in perspective view with the front casing in completely open condition,
- Figure 4: shows it in lateral perspective view in closed condition and with the rear casing in transparency,

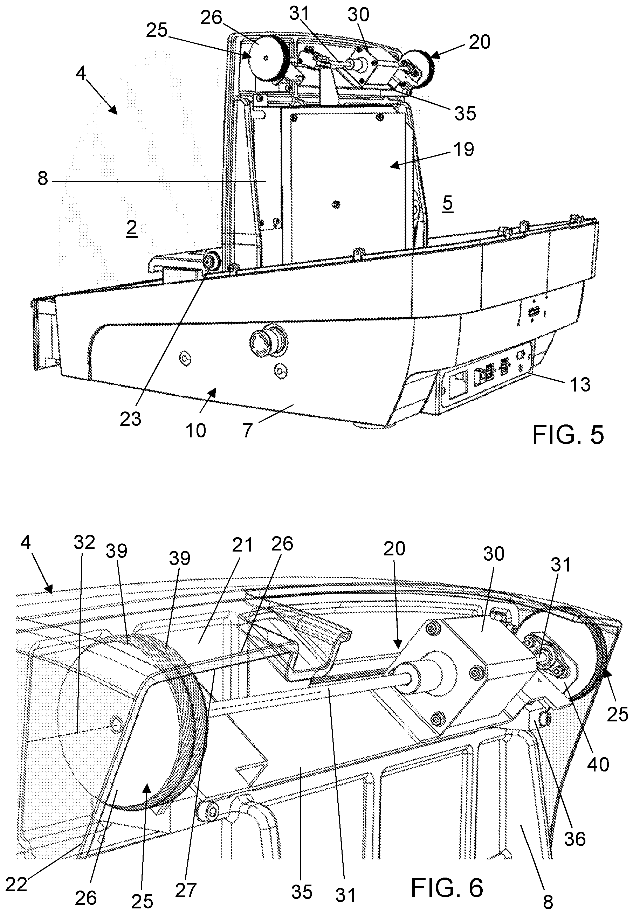

- Figure 5: shows it in a perspective view from behind, without the rear casing and with the front casing in transparency, and
- Figure 6: shows in perspective view an enlarged detail of fig. 5,

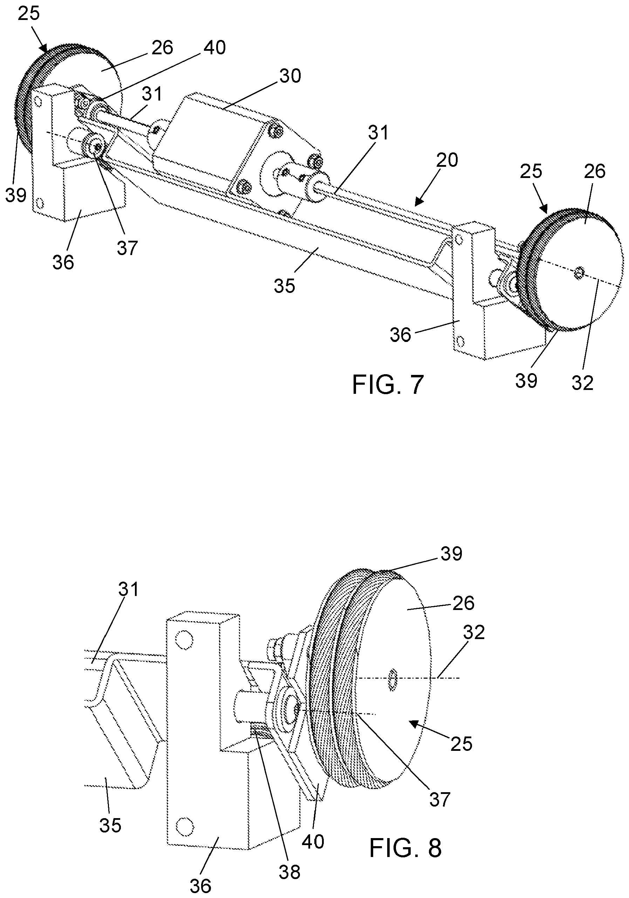

- Figure 7: shows the crankcase movement mechanism according to the invention,
- Figure 8: shows a detail of the movement mechanism of fig. 7, and

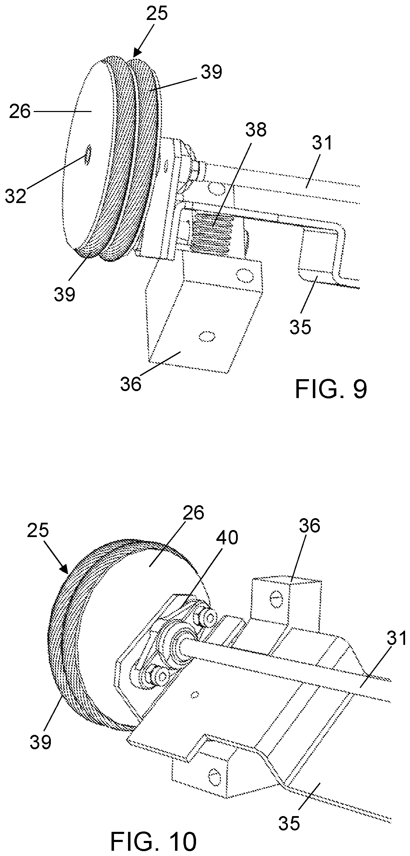

- Figure 9: shows, according to a different perspective view, the same detail of fig. 8,
- Figure 10: shows according to a further different perspective view the same detail of fig. 8.

As can be seen from the figures, according to the invention, the electronic key duplicating machine 1 comprises a support structure 10 and also comprises:
- a front operational area 2 which is accessible by the operator and which is removably covered and separated, at least partially, from the external environment 3 by means of a covering and/or protection crankcase 4 movable with respect to said support structure 10,
- a rear containment area 5 which is covered and separated from the external environment by a casing 6 which is suitably fixed to said support structure 10, i.e. not movable with respect to said support structure 10.

Conveniently, the duplicating machine 1 is professional or semi-professional, that is, it is of the type generally present and used in key duplication centers.

Conveniently, the support structure 10 comprises at the bottom a support base 7 and, moreover, comprises a dividing element 8, preferably defined by a substantially vertical dividing wall, which is mounted on said support base 7. In particular, the aforementioned two areas 2, 5 are defined above the support base 7 and are separated from each other by said dividing element 8.

Conveniently, the crankcase 4 is associated with the support structure 7 so that it can be rotated with respect to the latter; while the casing 6 is stably associated with the support structure 10, and, in particular, with the base 7 and/or the dividing element 8, by means of suitable mechanical fixing means, for example by means of interlocking engagement and/or traditional fixing members (screws, rivets, bolts, etc.).

Conveniently, at least one cutter 11, or another cutting member, of at least one milling device (both for flat keys and laser keys) and at least one clamp 12 for holding a key, which can be a raw key to be processed or an already encrypted key to be duplicated and whose encryption you want to read/acquire. Advantageously, means for detecting/reading the bitting of a key, such as for example a mechanical feeler and/or an optical reader, can be housed in the front operational area 2.

Advantageously, carriages 15, 17 are also housed in the front operational area 2 on which said at least one clamp 12 is mounted, to thus allow the movement, with respect to the cutter and/or the detection means, of the key held by the corresponding clamp.

Preferably, a first carriage 15 is provided which is motorized so as to allow the movement of said first carriage in both directions along a first horizontal axis Y of the machine 1. Preferably, a second carriage 17 is mounted on the first carriage 15, which is also it is motorized so as to allow movement of the latter with respect to the first carriage 15 in both directions along the horizontal axis X (which is perpendicular to the Y axis) of the machine 1.

Conveniently, the clamp 12 is mounted on the second carriage 17 which comprises a support and two superimposed jaws mounted on a pin fixed to said support. Conveniently, the jaws have a square plan and the facing surfaces are differently shaped so as to be able to hold keys together with different profiles.

Advantageously, a knob 18 is associated with the upper portion of the pin of the clamp 12 and has the function of controlling the approach and removal of the two jaws and their locking to the support.

Conveniently, the carriages 15, 17 are driven and made to move forward with respect to the cutter 11 inside the front operational area 2 so as to obtain in sequence the corresponding bitting slots on the stem of a blank key.

Conveniently, the rear containment area 5 is configured to house the components of the machine 1 for which direct access by the operator is not required during normal operation of the machine itself. In particular, in the rear containment area 5 are housed the motor (not shown) for driving the cutter 11 and the mechanical transmission members (not shown) for connecting the output of the motor to the cutter holder shaft; preferably, said cutter holder shaft is partially housed in the rear containment area 5 and protrudes into the front operational area 2.

Conveniently, the motors (not shown), preferably of the stepper type, are also housed in the rear containment area 5, for handling the first trolley 15 and the second trolley 17.

Conveniently, the machine 1 also comprises a control and command unit 19. Advantageously, the control and command unit 19 is also housed inside the rear containment area 5 of the whole machine 1. Conveniently, said control and command unit 19 comprises an electronic card configured and programmed for the control and command of the various components of the machine 1. Preferably, said unit 19 comprises storage means and is electrically connected to the motors of the machine 1 and with a plurality of sensors installed on the machine itself in order to manage em monitor its functioning. Advantageously, said unit 19 can be connected to an external electronic device by means of one or more data communication interfaces 13 (for example, traditional ports for cables or connectors), or via wireless connections, to thus allow the machine 1 to exchange (in reception and/or transmission) of data, commands or information with the outside world.

Conveniently, the machine 1 according to the invention comprises a mechanism - indicated as a whole with the reference "20" - for causing the movement, in particular motorized and automated, ie without the intervention of the operator, of the crankcase 4. Preferably, this movement mechanism 20 is configured to cause the rotation of the crankcase 4 between a first (closing) condition, in which said crankcase 4 covers at least partially the front operational area 2 so as to prevent at least the access by the operator to the cutter/s 11, and also prevent the escape of machining chips and sparks in the direction of the operator himself, and a second (opening) condition in which said crankcase 4 does not casing said front operational area 2 and/or in any case allows minus the operator's access to the clamp 12.

Conveniently, the movement mechanism 20 is housed inside the rear containment area 5. Advantageously the movement mechanism 20 is associated with (preferably mounted on) the face of the partition 8 facing the rear containment area 5. Advantageously, the movement mechanism 20 is associated with the partition 8 at the upper side of said wall.

Conveniently, the crankcase 4 is configured so that, in the closed condition and during the operation of the cutter (s) 11, it separates the front operational area 2 from the external environment 3 surrounding the machine 1, preferably closing it both frontally and laterally
Advantageously, the crankcase 4 is shaped and sized so that, in the closed condition, it completely isolates the front operational area 2 from the external environment 3. Alternatively, in a possible embodiment, the crankcase 4 can be shaped and dimensioned so as to partially casing the front operational area 2, in any case suitable for preventing the operator from accessing and approaching the cutter (s) 11 and also preventing the escape of machining chips and sparks in the direction of the operator.

Conveniently, the crankcase 4 is articulated to the fixed structure or fixed parts of the machine 1, such as for example to the support structure 10 (and in particular to the base 7 and/or the dividing wall 8) and/or to the rear casing 6.

Conveniently, the crankcase 4 is articulated so as to be able to rotate around an articulation axis 23, which is preferably substantially horizontal, to thus pass between said first (closing) condition and said second (opening) condition.

Preferably, in said second condition, said crankcase 4 is positioned so as to be wholly, or for the most part, housed inside the rear casing 6 or so as to casing said casing externally and above. Preferably, the side portions 22 of the crankcase 4 are articulated around corresponding articulation pins (defining said articulation axis 23) provided in correspondence with the lateral portions of the dividing wall 8, near the base 7. Conveniently, said articulation pins could be mounted directly on the base 7 and/or on the rear casing 6 in correspondence with the dividing wall 8.

Conveniently, the movement mechanism 20 is spaced apart from the articulation axis 23 of the crankcase 4. Preferably, the movement mechanism 20 is parallel to to the articulation axis 23 of the crankcase 4.

Advantageously, the crankcase 4 comprises a shaped portion, preferably made in a single body. Preferably, the crankcase 4 is shaped like a cylindrical sector.

Preferably, the crankcase 4 comprises a curved central portion 21, with concavity facing the articulation axis 23, and two lateral portions 22. Conveniently, in a version not shown, the crankcase 4 can consist only of said curved central portion 21, while the side portions 22 are not present or are stably fixed (and therefore not movable) to the support structure 10.

Preferably, the crankcase 4 is made of rigid material, such as for example plexiglass.

In a possible embodiment not shown, the crankcase 4 can comprise only the curved front portion 21, possibly made of flexible material or defined by a plurality of articulated blades substantially forming a gate, configured to slide along one or more guides mounted on the support structure 10.

Advantageously, the crankcase 4 is made, at least in its central portion 21, of transparent or translucent material to thus allow the operator to view the front operational area 2 through the casing itself.

Advantageously, the movement mechanism 20 comprises at least one rotating body 25 (preferably a small wheel 26) which interacts directly with the surface of the crankcase 4, preferably with the internal surface of the latter. Preferably, the rotating body 25 is in direct contact with the internal surface 27 of the central portion 21 of the crankcase 4.

Preferably, the movement mechanism 20 comprises two wheels 26 mutually spaced and configured to interact with the internal surface 27 of the curved central portion 21 of said crankcase 4. Conveniently, in a possible embodiment, the mechanism 20 can also comprise more than two wheels 26 (for example four wheels) which, preferably, are positioned symmetrically along the width of the crankcase 4.

Preferably, the movement mechanism 20 is configured so that the contact surface of the curved central portion 21 while the rotating body 25 is and always remains parallel with respect to the rotation axis of said at least one rotating body 25.

Conveniently, said contact surface can correspond to the inner surface of the crankcase 4. Alternatively, in a possible embodiment not shown, the movement mechanism 20 can be mounted on the casing 6 so as to interact with the external surface of the crankcase 4.

The movement mechanism 20 comprises at least one rotating body 25 which is driven in rotation by a corresponding motorization unit 30. Furthermore, said at least one rotating body 25 is configured to come into contact and act directly on a portion of the crankcase 4, in particular on the curved central portion 21, or on another element integral with said portion, to thus cause the movement of the crankcase 4 with respect to a fixed support structure of the machine 1.

The motorization unit 30 and said at least one rotating body 25 of the mechanism 20 are positioned and arranged within the overall dimensions of said crankcase 4, in particular inside of its overall dimensions in plan, preferably within the curved central portion 21 on which said at least one rotating body 25 also acts. Advantageously unlike traditional solutions, the motorization unit 30 and said at least one rotating body 25, which comes into contact and acts with a portion 21 of said crankcase 4, are not positioned laterally and externally with respect to the crankcase 4, and advantageously this allows to reduce the overall dimensions of the mechanism 20, thus allowing it to be housed inside the key-cutting machine, without thereby changing the overall dimensions of the machine itself.

In particular, suitably, the motorization unit 30 and said at least one rotating body 25 are configured (ie both in terms of shape and size) to be contained within the width of the curved central portion 21 of the casing or to be contained/arranged between the side portions 22 (if provided) of the casing itself.

Preferably, the motorization unit 30 and said at least one rotating body 25 of the mechanism 20 are arranged below the crankcase 4, to thus allow the rotating body to act directly on the inner surface of the curved central portion 21 of said crankcase 4.

Advantageously, said at least one rotating body 25 is mounted at the end of the rotating shaft 31 at the output of the motorization unit 30. Preferably, the rotating shaft 31 corresponds to the output shaft of the motorization unit 30 and/or comprises a longitudinal element (rod) fixed and integral in rotation with the output shaft of the motorization unit 30.

Preferably, the movement mechanism 20 comprises two wheels 26 mounted at the opposite ends of a shaft 31 which protrudes and is driven in rotation by the drive unit 30.

Conveniently, the motorization unit 30 comprises an electric motor, preferably of the stepper type. Preferably, the motorization unit 30 comprises a through output shaft 31 (i.e., which protrudes from the two opposite sides of the box-like casing of said unit) and, suitably, at each end of said shaft a corresponding small wheel 26. In particular, each small wheel 26 is integral in rotation with the output shaft 31 of the motorization unit 30.

Advantageously, therefore, the rotation axis 32 of the output shaft 31 of the motorization unit 30 corresponds to the rotation axis of said at least one rotating body 25 and, in particular, of both wheels 26 (ie the output shaft and the rotating body are coaxial). Preferably, said rotation axis 32 is spaced from the articulation axis 23 of the crankcase 4. Preferably, said rotation axis 32 is parallel to the articulation axis 23 of the crankcase 4.

Conveniently, the motorization unit 30 is fixed to a support member 35, preferably defined by a substantially laminar extension bracket.

Conveniently, the support member 35 is elastically articulated to the dividing wall 8. In particular, said at least one small wheel 26 is mounted and supported by the rotating shaft 31 driven in rotation by the motorization unit 30 which is mounted/fixed to the support 35, which is in turn mounted in an articulated manner to the dividing wall 8. Preferably, the support member 35 is articulated at its ends in blocks 36 which are fixed to the dividing wall 8. Conveniently, also the axis 37 of the support member 35 to the partition 8 is parallel to the rotation axis 32 of the motorization unit 30 and, preferably, also to the articulation axis of the crankcase 4.

Conveniently, the movement mechanism 20 is configured so as to push and keep said at least one rotating body 25 - and in particular the wheels 26 - in contact with the internal 26 and/or external 27 contact surface of the crankcase 4. Preferably and, for this purpose, elastic means 38 are provided - for example compression springs - interposed between the blocks 36 fixed to the dividing wall 8 and to said support member 35 (which is articulated to said blocks) so as to push said member (on which the motorization unit 30 is mounted which supports, by means of the rotating shaft 31, the small wheels 26) towards the crankcase 4.

Conveniently, each small wheel 26 comprises at least one disc-shaped element (preferably two disc-shaped elements having one face in mutual contact) which is provided at its edge/external profile with means 39 configured to engage by friction the corresponding contact surface of said portion of the casing, so that the rotation of the small wheel causes the movement of said casing.

Advantageously, these means 39 comprise a coating, preferably rubberized, configured to create - in correspondence with its contact area with the corresponding surface of the crankcase 4 - such that the rotation of the wheels 26 causes the crankcase 4 to move in rotation around its articulation axis 23. Alternatively, these means 39 may comprise a gear profile (thus defining for example a pinion) which engages with a linearly developed gear counter-profile (for example a rack) integral with the crankcase 4, in such a way that the rotary motion of the rotating body 25 is transmitted and converted into a movement of the crankcase 4.

Conveniently, in a version not shown, the rotating body 25 comprises a toothed wheel which interacts with a rack defined and/or integral with the crankcase 4, preferably to its curved central portion 21.

Advantageously, on the support member 35 are also mounted - in correspondence with the small wheels 26 - the guide supports 40 for the rotating shaft 31. In particular, these supports 40 comprise plates which are fixed to the bracket which defines the support member 35 and which are configured and/or equipped with means (for example bearings) for idly supporting the rotating shaft 31.

Advantageously, the motorization unit 30 of the movement mechanism 20 of the crankcase 4 is electrically connected to the control and command unit 19 of the machine 1, so as to receive from the latter the commands for its activation/deactivation, and thus cause the passage of the crankcase 4 from the open to the closed condition, and/or vice versa.

Conveniently, the motorization unit 30 is configured, and in particular it is sized in terms of the motor torque supplied at the output, so as to be able to cause, by means of the rotating body 25, the rotation/movement of the crankcase 4, and thus bring it from the open condition to the closed condition, and vice versa. Preferably, at the same time, the motorization unit 30 is configured/sized in such a way as to supply an output torque which is lower than the manual force required by the operator to cause the movement/rotation of the crankcase 4 around the axis of articulation 23; in essence, in this way, the operator can, if necessary, intervene manually in order to overcome and oppose the motor torque supplied by the motorization unit 30.

The operation of the mechanism, according to the invention, for the movement 20 of the crankcase 4 it is clear from what has just been described.

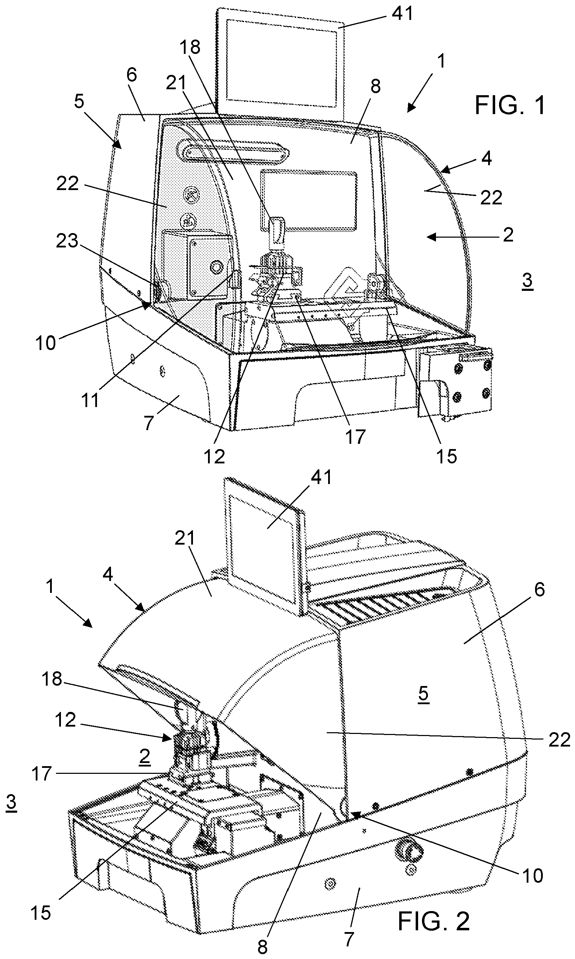

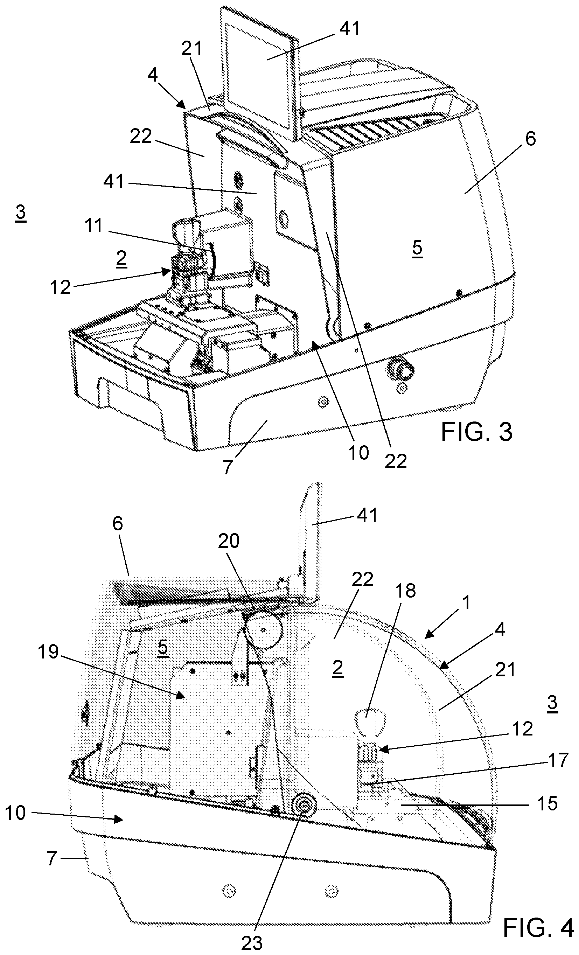

Conveniently, with the casing open (see fig. 2 and 3), the operator can access the front operational area 2 of the machine 1 in order to position the blank key to be encrypted and/or the already encrypted key to be read in correspondence of terminal 12.

Once this is done, the operator can set and control, by acting on traditional input means (buttons or touch-screen 41) with which the machine is equipped, the operation of cutting the blank key blocked on the clamp 12 so as to replicate on this, by means of the cutter 11 provided in the front operational area 2 of the machine, a specific bitting profile. Conveniently, the operator can also set and command the reading/acquisition operation of the encryption profile of a key (already encrypted).

Conveniently, once such a command has been received from the operator, the control and command unit 19 of the machine is configured so as to send a corresponding/suitable activation signal to the motorization unit 30 of the mechanism 20 for moving the crankcase 4, which thus causes the casing itself to pass from the open condition to a closed condition in which it isolates/separates the front operational area 2 of the machine from the external environment 3 or, at least, prevents/makes access difficult by an operator of the cutter 20 provided in said front operational area 2 and, furthermore, prevents the escape of machining chips or sparks from the machining area 2.

In particular, the motorization unit 30 activates the rotation of the rotating shaft 31, and therefore of the wheels 26, which - acting and always remaining in contact with a corresponding surface of the crankcase - drag it into rotation around its articulation axis 23, thus making it pass from the open to the closed condition.

Conveniently, therefore, during the execution of the automated cutting operation (in which the cutter is therefore activated), the crankcase 4 is and remains in the closed condition.

Conveniently, once the automated cutting operation of the key bitting profile has been completed, the control and command unit 19 of the machine 1 is configured so as to send a corresponding/appropriate activation signal to the motorization unit 30 of the mechanism movement 20 of the crankcase 4, which thus causes the casing itself to pass from the closed condition to an open condition, thus allowing the operator to access the front operational area 2 and thus take the newly coded key from terminal 12.

Preferably, the control and command unit 19 is configured so that the activation of the cutter 11 occurs only if/when the crankcase 4 is in the closed condition; suitably, to detect the condition/position of the crankcase 4 (and this in order to then send corresponding signals to the control and command unit 19), traditional sensors are provided which are associated with the motor (for example encoders) and/or which detect the interaction/contact between the crankcase 4 and the support structure 10.

It is clear from what has been said that the mechanism, according to the invention, for the motorized and automated movement of the crankcase 4 covering the front operational area 2 of a key duplicating machine 1 is particularly advantageous in that:
- it makes the machine itself more comfortable and efficient,
- it is particularly compact, cheap and easy to make,
- it also allows the manual handling of the crankcase, and
- it can be easily applied/implemented also in duplicating machines already available on the market.

## Claims

1. Key duplicating machine (1), preferably of the professional or semi-professional type, comprising:
- a support structure (10),
- a front operational area (2) which is accessible by the operator and which is removably covered and separated, at least partially, from the external environment (3) by means of a covering and/or protection crankcase (4) which is movable with respect to said structure of support (10), in said front operational area (2) being housed at least one cutter (11), and/or another cutting element, and at least one terminal (12) for locking a key,
- a rear containment area (5) which is covered and separated from the external environment (3) by a casing (6) mechanically fixed to said support structure (10),
- a control and command unit (19) of the various components of said machine (1),
said machine further comprising a mechanism (20) for moving said crankcase (4) for covering and/or protecting the front operational area (2), said crankcase (4) being configured to be mounted on a fixed structure (10, 7, 8, 6) of said duplicating machine (1) so as to be able to be moved with respect to said fixed structure (10, 7, 8, 6), said mechanism (20) comprising at least one rotating body (25) which is operated in rotation by a motorization unit (30) and which is configured to come into contact and act directly on a portion (21) of said crankcase (4), or on an integral element to said portion (21), to thus cause the movement of said crankcase (4) with respect to said fixed structure (10, 7, 8, 6), said motorization unit (30) and said at least one rotating body (25) being positioned within the overall dimensions of said crankcase (4) to be moved.

2. Machine according to claim 1, wherein said motorization unit (30) and said at least one rotating body (25) of the mechanism (20) are arranged under the crankcase (4), to thus allow the rotating body to act directly on the internal surface of the casing itself.

3. Machine according to one of the preceding claims, wherein said crankcase (4) comprises a curved central portion (21), possibly interposed between the lateral portions (22), with concavity facing the articulation axis (23).

4. Machine according to claim 3, wherein the movement mechanism (20) is configured so that the contact surface of the curved central portion (21) of said casing with the rotating body (25) is and always remains parallel with respect to the rotation axis of said at least one rotating body (25).

5. Machine according to claim 3, wherein said at least one rotating body (25) is and always remains in direct contact with the internal surface (27) of the curved central portion (21) of the crankcase (4).

6. Machine according to one of the preceding claims, wherein said crankcase (4) is articulated to said fixed structure (10, 7, 8, 6) around an articulation axis (23) so that the movement of said crankcase (4) causes its rotation around said articulation axis (23), said rotating body (25) acting on a portion (21) of said crankcase (4) which is spaced apart from said articulation axis (23).

7. Machine according to one of the preceding claims wherein said mechanism (20) is configured so that, at least during the rotation of said crankcase (4), said at least rotating body (25) is pushed towards a surface (27), having a curved shape, of said portion (21) of said crankcase (4), to thus keep said rotating body (25) in contact with said surface (27) of said portion (21) of crankcase (4).

8. Machine according to one of the preceding claims, wherein said drive unit (30) of the mechanism (20) is mounted on a support member (35) which is configured to be elastically articulated to a fixed structure (10, 7, 8, 6) of said machine (1), preferably to a dividing wall (8) of the front operational area (2) from the rear containment area (5).

9. Machine according to one of the preceding claims, wherein said at least one rotating body (25) of the mechanism (20) is mounted on a rotating shaft (31) in/with motorization unit (30) output, said shaft (31) being coaxial with the rotation axis (32) of said at least one rotating body (25).

10. Machine according to one of the preceding claims, wherein said at least one rotating body (25) of the mechanism (20) comprises at least two wheels (26), spaced apart, which are in contact and act on at least one of the same surface (27) of said portion (21) of said crankcase (4).

11. Machine according to one of the preceding claims, wherein said drive unit (30) of the mechanism (20) comprises a through output shaft (31) which protrudes from two opposite sides of said drive unit (30) and in that, at each end of said output shaft (31), at least one rotating body (25) is mounted.

12. Machine according to one of the preceding claims, wherein it comprises a dividing element (8), preferably defined by a substantially vertical dividing wall, which separates said front operational area (2) from said rear containment area (5), and by the fact that said mechanism (20) for moving said crankcase (4) is installed on said dividing element (8).

13. Machine according to one of the preceding claims, wherein said movement mechanism (20) is configured to cause the automated and motorized rotation of the crankcase (4) between:
- a first closing condition, in which said crankcase (4) at least partially covers the front operational area (2) so as to prevent access by the operator to said at least one cutter (11) and/or to another sharp element and
- a second opening condition in which said crankcase (4) does not case said front operational area (2) and/or allows access by the operator to said at least one clamp (12).

14. Machine according to one of the preceding claims, wherein the motorization unit (30) of the movement mechanism (20) of the crankcase (4) is electrically connected to the control and command unit (19) of the machine (1), to thus receive corresponding command signals from said control and command unit (19).

15. Machine according to one of the preceding claims, wherein the control and command unit (19) is configured so that the activation of the cutter (11), and/or other cutting element, is provided in the front operational area (2) which is accessible by the operator, only if/when the crankcase (4) is in the closed condition.

## Patentansprüche

1. Schlüssel-Dupliziermaschine (1), vorzugsweise des professionellen oder halbprofessionellen Typs, bestehend aus:
- einer Stützstruktur (10),
- einem Vorderarbeitsbereich (2), der für den Bediener zugänglich ist und der abnehmbar abgedeckt und zumindest teilweise von der äußeren Umgebung (3) mittels einer Abdeckung und/oder eines Schutzgehäuses (4) getrennt ist, das in Bezug auf die Stützstruktur (10) beweglich ist, wobei in dem Vorderarbeitsbereich (2) mindestens ein Schneidwerkzeug (11) und/oder ein anderes Schneidelement und mindestens eine Klemme (12) zum Verschließen eines Schlüssels untergebracht sind,
- einem Hinterbegrenzungsbereich (5), der durch ein Gehäuse (6), das mechanisch an der Stützstruktur (10) befestigt ist, abgedeckt und von der äußeren Umgebung (3) getrennt ist,
- eine Steuer- und Antriebseinheit (19) für die verschiedenen Bestandteilen der Maschine (1),
wobei die Maschine ferner einen Mechanismus (20) zum Bewegen des Gehäuses (4) zum Abdecken und/oder Schützen des Vorderarbeitsbereichs (2) umfasst, wobei das Gehäuse (4) konfiguriert ist, an einer Feststruktur (10, 7, 8, 6) der Dupliziermaschine (1) eingebaut zu werden, um in Bezug auf die Feststruktur (10, 7, 8, 6) bewegt werden zu können, wobei der Mechanismus (20) mindestens einen Drehkörper (25) umfasst, der durch eine Motorisierungseinheit (30) in Drehung versetzt wird und der konfiguriert ist, mit einem Abschnitt (21) des Gehäuses (4) oder mit einem integralen Element des Abschnitts (21) in Kontakt zu kommen und direkt darauf zu wirken, um so die Bewegung des Gehäuses (4) in Bezug auf die Feststruktur (10, 7, 8, 6) zu bewirken, wobei die Motorisierungseinheit (30) und der mindestens eine Drehkörper (25) innerhalb der Gesamtabmessungen des zu bewegenden Gehäuses (4) angeordnet sind.

2. Maschine nach Anspruch 1, wobei die Motorisierungseinheit (30) und der mindestens eine Drehkörper (25) des Mechanismus (20) unter dem Gehäuse (4) angeordnet sind, um dem Drehkörper zu ermöglichen, direkt auf die Innenfläche des Gehäuses selbst zu wirken.

3. Maschine nach einem der vorhergehenden Ansprüche, **dadurch gekennzeichnet, dass** das Gehäuse (4) einen gekrümmten Mittelabschnitt (21) aufweist, der gegebenenfalls zwischen den Seitenabschnitten (22) angeordnet ist, wobei die Konkavität der Gelenkachse (23) zugewandt ist.

4. Maschine nach Anspruch 3, wobei der Bewegungsmechanismus (20) konfiguriert ist, sodass die Kontaktfläche des gekrümmten Mittelabschnitts (21) des Gehäuses mit dem Drehkörper (25) in Bezug auf die Drehachse des mindestens einen Drehkörpers (25) parallel ist und immer so bleibt.

5. Maschine nach Anspruch 3, wobei der mindestens eine Drehkörper (25) in direktem Kontakt mit der Innenfläche (27) des gekrümmten Mittelabschnitts (21) des Gehäuses (4) ist und immer so bleibt.

6. Maschine nach einem der vorhergehenden Ansprüche, wobei das Gehäuse (4) an der Feststruktur (10, 7, 8, 6) um eine Gelenkachse (23) angelenkt ist, so dass die Bewegung des Gehäuses (4) seine Drehung um die Gelenkachse (23) bewirkt, wobei der Drehkörper (25) auf einen Abschnitt (21) des Gehäuses (4) wirkt, der von der Gelenkachse (23) beabstandet ist.

7. Maschine nach einem der vorhergehenden Ansprüche, wobei der Mechanismus (20) konfiguriert ist, sodass zumindest während der Drehung des Gehäuses (4) der zumindest Drehkörper (25) in Richtung einer Oberfläche (27), die eine gekrümmte Form aufweist, des Abschnitts (21) des Gehäuses (4) gedrückt wird, um so den Drehkörper (25) in Kontakt mit der Oberfläche (27) des Abschnitts (21) des Gehäuses (4) zu halten.

8. Maschine nach einem der vorhergehenden Ansprüche, wobei die Betätigungseinheit (30) des Mechanismus (20) an einem Stützelement (35) eingebaut wird, das konfiguriert ist, elastisch an einer Feststruktur (10, 7, 8, 6) der Maschine (1), vorzugsweise an einer Trennwand (8) des Vorderarbeitsbereichs (2) von dem Hinterbegrenzungsbereich (5), angelenkt zu werden.

9. Maschine nach einem der vorhergehenden Ansprüche, wobei der mindestens eine Drehkörper (25) des Mechanismus (20) auf einer Drehwelle (31) in/mit dem Ausgang der Motorisierungseinheit (30) eingebaut wird, wobei die Welle (31) koaxial mit der Drehachse (32) des mindestens einen Drehkörpers (25) ist.

10. Maschine nach einem der vorhergehenden Ansprüche, wobei der mindestens eine Drehkörper (25) des Mechanismus (20) mindestens zwei Räder (26) umfasst, die voneinander beabstandet sind und in Kontakt stehen und auf mindestens eine der gleichen Oberfläche (27) des Abschnitts (21) des Gehäuses (4) wirken.

11. Maschine nach einem der vorhergehenden Ansprüche, wobei die Betätigungseinheit (30) des Mechanismus (20) eine durchgehende Abtriebswelle (31) aufweist, die aus zwei gegenüberliegenden Seiten der Betätigungseinheit (30) vorsteht, und wobei an jedem Ende der Abtriebswelle (31) mindestens ein Drehkörper (25) eingebaut wird.

12. Maschine nach einem der vorhergehenden Ansprüche, wobei sie ein Trennelement (8) aufweist, das vorzugsweise durch eine im Wesentlichen Vertikaltrennwand definiert ist, die den Vorderarbeitsbereich (2) von dem Hinterbegrenzungsbereich (5) trennt, und auf Grund der Tatsache, dass der Mechanismus (20) zum Bewegen des Gehäuses (4) an dem Trennelement (8) installiert wird.

13. Maschine nach einem der vorhergehenden Ansprüche, wobei der Bewegungsmechanismus (20) konfiguriert ist, die automatische und motorisierte Drehung des Gehäuses (4) zwischen:
- einem ersten Schließzustand, in dem das Gehäuse (4) den Vorderarbeitsbereich (2) zumindest teilweise abdeckt, um den Zugang des Bedieners zu dem mindestens einen Schneidwerkzeug (11) und/oder zu einem anderen scharfen Element zu verhindern, und
- einem zweiten Öffnungszustand, in dem das Gehäuse (4) den Vorderarbeitsbereich (2) nicht abdeckt und/oder dem Bediener den Zugang zu der mindestens einen Klemme (12) ermöglicht.

14. Maschine nach einem der vorhergehenden Ansprüche, wobei die Motorisierungseinheit (30) des Bewegungsmechanismus (20) des Gehäuses (4) elektrisch mit der Steuer- und Antriebseinheit (19) der Maschine (1) verbunden ist, um so entsprechende Befehlssignale von der Steuer- und Antriebseinheit (19) zu empfangen.

15. Maschine nach einem der vorhergehenden Ansprüche, wobei die Steuer- und Antriebseinheit (19) konfiguriert ist, die Aktivierung des Schneidwerkzeuges (11) und/oder eines anderen Schneidelements im Vorderarbeitsbereich (2), der für den Bediener zugänglich ist, nur vorgesehen ist, wenn sich das Gehäuse (4) im geschlossenen Zustand befindet.

## Revendications

1. Machine de reproduction de clés (1), de préférence du type professionnel ou semi-professionnel, comprenant :
- une structure de support (10),
- une zone opérationnelle frontale (2) qui est accessible par l'opérateur et qui est couverte de manière amovible et séparée, au moins partiellement, de l'environnement extérieur (3) au moyen d'un carter de couverture et/ou de protection (4) qui est mobile par rapport à ladite structure de support (10), dans ladite zone opérationnelle frontale (2) sont logés au moins une lame (11), et/ou un autre élément de coupe, et au moins une borne (12) pour le verrouillage d'une clé,
- une zone de confinement arrière (5) qui est couverte et séparée de l'environnement extérieur (3) par une enveloppe (6) fixée mécaniquement à ladite structure de support (10),
- une unité de contrôle et de commande (19) des différents composants de ladite machine (1),
ladite machine comprend en outre un mécanisme (20) de déplacement dudit carter (4) pour couvrir et/ou protéger la zone opérationnelle avant (2), ledit carter (4) étant configuré pour être monté sur une structure fixe (10, 7, 8, 6) de ladite machine de reproduction (1) de manière à pouvoir être déplacé par rapport à ladite structure fixe (10, 7, 8, 6), ledit mécanisme (20) comprenant au moins un corps rotatif (25) qui est actionné en rotation par une unité de motorisation (30) et qui est configuré pour entrer en contact et agir directement sur une partie (21) dudit carter (4), ou sur un élément solidaire de ladite partie (21), pour ainsi provoquer le déplacement dudit carter (4) par rapport à ladite structure fixe (10, 7, 8, 6), ladite unité de motorisation (30) et ledit au moins un corps rotatif (25) étant positionnés à l'intérieur de l'encombrement dudit carter (4) à déplacer.

2. Machine selon la revendication 1, dans laquelle ladite unité de motorisation (30) et ledit au moins un corps rotatif (25) du mécanisme (20) sont disposés sous le carter (4), pour permettre ainsi au corps rotatif d'agir directement sur la surface interne du carter lui-même.

3. Machine selon l'une des revendications précédentes, dans laquelle ledit carter (4) comprend une partie centrale incurvée (21), éventuellement interposée entre les parties latérales (22), dont la concavité est orientée vers l'axe d'articulation (23).

4. Machine selon la revendication 3, dans laquelle le mécanisme de mouvement (20) est configuré pour que la surface de contact de la partie centrale incurvée (21) dudit boîtier avec le corps rotatif (25) soit et reste toujours parallèle par rapport à l'axe de rotation dudit au moins un corps rotatif (25).

5. Machine selon la revendication 3, dans laquelle ledit au moins un corps rotatif (25) est et reste toujours en contact direct avec la surface interne (27) de la partie centrale incurvée (21) du carter (4).

6. Machine selon l'une des revendications précédentes, dans laquelle ledit carter (4) est articulé à ladite structure fixe (10, 7, 8, 6) autour d'un axe d'articulation (23) de sorte que le mouvement dudit carter (4) entraîne sa rotation autour dudit axe d'articulation (23), ledit corps rotatif (25) agissant sur une partie (21) dudit carter (4) qui est écartée dudit axe d'articulation (23).

7. Machine selon l'une des revendications précédentes dans laquelle ledit mécanisme (20) est configuré pour que, au moins pendant la rotation dudit carter (4), ledit corps au moins rotatif (25) soit poussé vers une surface (27), de forme incurvée, de ladite partie (21) dudit carter (4), pour ainsi maintenir ledit corps rotatif (25) en contact avec ladite surface (27) de ladite partie (21) de carter (4).

8. Machine selon l'une des revendications précédentes, dans laquelle ladite unité d'entraînement (30) du mécanisme (20) est montée sur un élément de support (35) configuré pour s'articuler élastiquement à une structure fixe (10, 7, 8, 6) de ladite machine (1), de préférence à une paroi de séparation (8) entre la zone opérationnelle avant (2) et la zone de confinement arrière (5).

9. Machine selon l'une des revendications précédentes, dans laquelle ledit au moins un corps rotatif (25) du mécanisme (20) est monté sur un arbre rotatif (31) dans/avec la sortie de l'unité de motorisation (30), ledit arbre (31) étant coaxial avec l'axe de rotation (32) dudit au moins un corps rotatif (25).

10. Machine selon l'une des revendications précédentes, dans laquelle ledit au moins un corps rotatif (25) du mécanisme (20) comprend au moins deux roues (26), espacées, qui sont en contact et agissent sur au moins une même surface (27) de ladite partie (21) dudit carter (4).

11. Machine selon l'une des revendications précédentes, dans laquelle ladite unité d'entraînement (30) du mécanisme (20) comprend un arbre de sortie traversant (31) qui fait saillie de deux côtés opposés de ladite unité d'entraînement (30) et dans laquelle, à chaque extrémité dudit arbre de sortie (31), au moins un corps rotatif (25) est monté.

12. Machine selon l'une des revendications précédentes, dans laquelle elle comprend un élément de séparation (8), de préférence défini par une paroi de séparation sensiblement verticale, qui sépare ladite zone opérationnelle avant (2) de ladite zone de confinement arrière (5), et par le fait que ledit mécanisme (20) de déplacement dudit carter (4) est installé sur ledit élément de séparation (8).

13. Machine selon l'une des revendications précédentes, dans laquelle ledit mécanisme de mouvement (20) est configuré pour provoquer la rotation automatisée et motorisée du carter (4) entre :
- une première condition de fermeture, dans laquelle ledit carter (4) couvre au moins partiellement la zone opérationnelle avant (2) de manière à empêcher l'accès de l'opérateur à ladite au moins une lame (11) et/ou à un autre élément tranchant et
- une seconde condition d'ouverture dans laquelle ledit carter (4) ne couvre pas ladite zone opérationnelle avant (2) et/ou permet à l'opérateur d'accéder à ladite au moins une pince (12).

14. Machine selon l'une des revendications précédentes, dans laquelle l'unité de motorisation (30) du mécanisme de mouvement (20) du carter (4) est reliée électriquement à l'unité de contrôle et de commande (19) de la machine (1), pour recevoir ainsi des signaux de commande correspondants de ladite unité de contrôle et de commande (19).

15. Machine selon l'une des revendications précédentes, dans laquelle l'unité de contrôle et de commande (19) est configurée pour que l'activation de la lame (11), et/ou d'un autre élément de coupe, soit assurée dans la zone opérationnelle avant (2) qui est accessible par l'opérateur, uniquement si/quand le carter (4) est à l'état fermé.
